# EUROPEAN PATENT APPLICATION

(11) **EP 2 389 792 A1**
(43) Date of publication of application: **30.11.2011**
(21) Application number: 11167790.2
(22) Date of filing: 27.05.2011
(51) Int. Cl.: A01B 59/06, A01B 61/02, B60D 1/62

(54) **Position adjustable coupler and hitch equipped therewith**

(30) Priority: 28.05.2010 US 789686
(71) Applicant: RAD Technologies, Thetford Mines QC G6G 5R7 (CA)
(72) Inventor: Goulet, Denis, Saint-Pierre de Broughton, Québec G0N 1T0 (CA); Lamontagne, Louis, Thetford Mines, Québec G6G 6A1 (CA); Fraser, Serge, St-Joseph de Coleraine, Québec G0N 1B0 (CA)
(74) Representative: Wittmann, Günther

(57) **Abstract**

The present relates to a position adjustable coupler (12) and to a hitch (10) comprising such a coupler. The position adjustable coupler (12) comprises a connector (16) and a securing mechanism (20). The securing mechanism (20) is adapted for fixedly securing the connector (16) to a frame (14). The securing mechanism (20) comprises a position adjustment mechanism (22) for allowing movements of the connector (16) within the securing mechanism (20).

## Description

### FIELD

The present relates to couplers, such as electric, pneumatic and hydraulic couplers, and more particularly to a coupler capable of planar movement.

### BACKGROUND

Vehicles are used with various types of implements. Implements are affixed to the vehicle by means of a hitch. A first part of a hitch is affixed to the vehicle, and a complementary part is affixed to the implement. The part of the hitch on the vehicle may further be designed so as to assist in lifting the implement from a resting position.

In addition to the hitch for allowing lifting and securing of the implement to the vehicle, certain implements require power to function. Power from the vehicle is generally provided to the implement by means of one or several couplers, adapted for engaging a corresponding power coupler of the implement.

However, precise positioning of the coupler of the vehicle with respect to the power coupler of the implement is not always simple, and sometimes not possible. When the coupler of the vehicle is not precisely aligned with the coupler of the implement, premature wear is imposed on engagement mechanisms of the coupler and of the power coupler of the implement, and on the power couplers themselves. Furthermore, during operation of the implement, impact may cause relative movement of the implement with respect to the hitch of the vehicle, resulting in an impact on the coupler of the vehicle and of the power coupler of the implement, and partial or complete disengagement.

There is therefore a need for a coupler that alleviates the aforementioned problems.

### SUMMARY

The present relates to couplers, and more particularly to couplers capable of planar movement.

In a first aspect, the present provides a position adjustable coupler comprising a connector and a securing mechanism. The securing mechanism is adapted for fixedly securing the connector to a frame. The securing mechanism comprises a position adjustment mechanism for allowing planar movement of the connector within the securing mechanism.

In another aspect, the present provides a position adjustable coupler comprising a connector, a securing mechanism and a compression adjustment mechanism. The securing mechanism is adapted for fixedly securing the connector to a frame. The securing mechanism comprises a position adjustment mechanism for allowing planar movement of the connector within the securing mechanism. The compression adjustment mechanism adjusts pressure and position received by the connector.

In yet another aspect, the present provides a hitch comprising a position adjustable coupler.

### BRIEF DESCRIPTION OF THE DRAWINGS

In the following description, the following drawings are used to describe and exemplify the present position adjustable coupler and hitch:

Figure 1 is a perspective view of a hitch of an implement with a coupler installed;

Figure 2 is a perspective exploded view of the coupler;

Figure 3 is a perspective exploded view of an implement hitch with the present coupler;

Figure 4 is a perspective view of an implement hitch with the present coupler and a corresponding vehicle hitch; and

Figure 5 is a perspective view of an exemplary electrical coupler.

### DETAILED DESCRIPTION

The present relates to couplers, and more particularly to couplers to be used on vehicles equipped with a hitch.

The industry of vehicles adapted to receive implements, and implements themselves is quite vast. It goes from residential to commercial and industrial applications. Examples of vehicles adapted to receive implements include tractors, trucks, all terrain vehicles and heavy machinery. The variety of implements is very wide; each implement corresponding to a particular task to be performed by the vehicle. Some of those implements require power provided by the vehicle to function. Various types of power may be required by the implement: hydraulic power, pneumatic power, electrical power and motion generated by an engine of the vehicle.

To convey hydraulic, pneumatic and electric power from the vehicle to the implement, corresponding couplers are used. Couplers may be connected automatically, but such an automatic connection requires perfect alignment to avoid damaging the connectors, which is not always possible or feasible. Furthermore, during operation, the implement may encounter resistance, which may result in impact on the implement and on the couplers conveying power from the vehicle. The impact may be sufficient to damage the couplers, to disengage the couplers, or to partially disengage the couplers resulting in a loss of power at the implement, wear and breaking. Thus impact on the implement often results in premature wear of the couplers.

To alleviate these problems, the present provides a coupler capable of self-adjustment. The present coupler is adapted to be installed on a vehicle hitch and/or on an implement hitch.

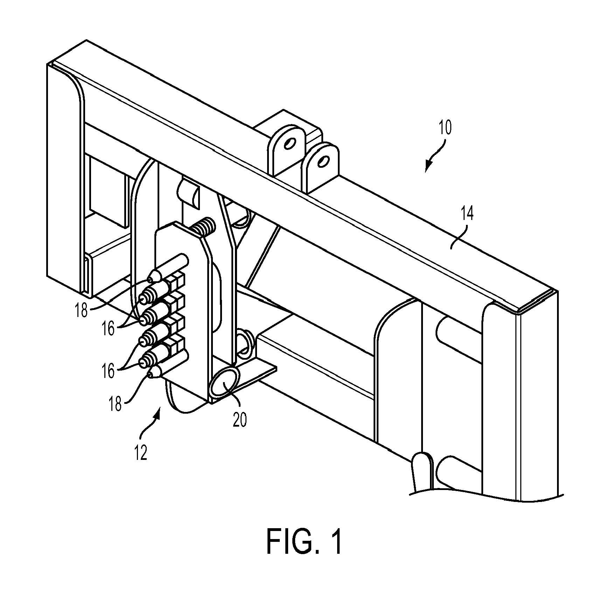

Reference is now made to Figure 1, which depicts a perspective view of an implement hitch 10 with a position adjustable coupler 12 installed. The coupler 12 can be installed on a vehicle's hitch or on an implement's hitch. The implement hitch 10 is provided with a frame 14 onto which the coupler 12 is affixed. The coupler 12 may comprise one or several types of connectors, such as hydraulic connectors, pneumatic connectors, and electrical connectors. Although two pairs of hydraulic connectors 16 and one pair of guiding pins 18 are shown, the present coupler 12 is not limited to such a configuration of connectors and guiding pins. The coupler 12 further comprises a securing mechanism 20 for fixedly securing the connectors 16 and the guiding pins 18 to the frame 14.

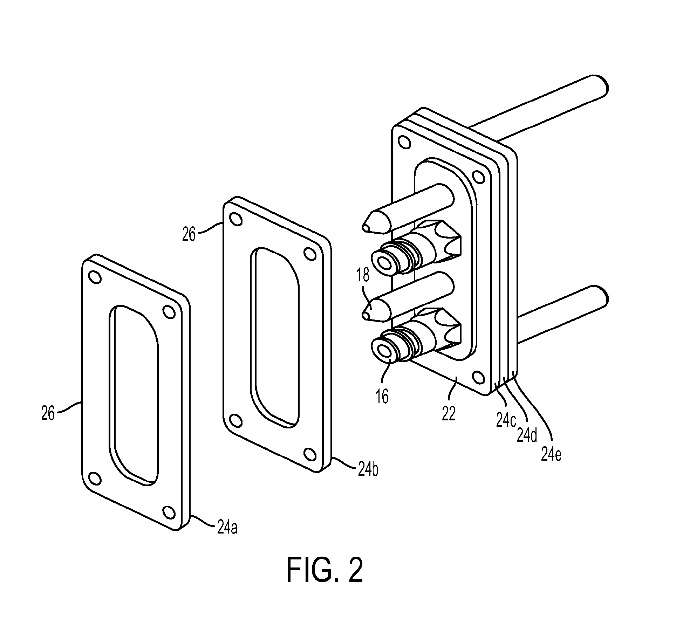

Reference is now made to Figure 2, which provides a perspective exploded view of the coupler 12. The securing mechanism 20 comprises a position adjustment mechanism 22 for allowing planar movement of the connectors 16 and 18 within the securing mechanism 20.

For receiving the position adjustment mechanism 22, the securing mechanism 20 may be composed of one or a plurality of affixing members 24a, 24b, 24c, 24d and 24e. Each of the affixing members 24a, 24b, 24c, 24d and 24e are adapted to be fixedly secured to the frame 14 of the implement hitch 10 by any known means of securing to a frame, such as for example screws, nuts and bolts, welding, etc.

The affixing members 24a, 24b, 24c, 24d and 24e each define a perimeter 26 of an aperture. At least one of the affixing members, preferably located substantially in a middle of the group of affixing members, i.e. affixing member 24c, defines a larger perimeter than the other affixing members 24a, 24b, 24d and 24e. When affixed to the frame 14, the affixed member 24c with its larger perimeter defines with the other affixing members 24a, 24b, 24d and 24e, a slot for receiving the position adjustment mechanism 22. The affixing members 24a, 24b, 24c, 24d and 24e may be fixed together by means of screws, bolts, or any other known means for fixing together plural members.

Although the slot of the securing mechanism for receiving the position adjustment mechanism 22 is described herein as being provided by a plurality of affixing members with at least one affixing member having an aperture of larger perimeter, the present coupler is not limited to such an implementation. Any alternative combination of components for providing an aperture defined by a slot in which the position adjust mechanism 22 is received and allowed planar movement therein is also encompassed.

The position adjustment mechanism 22 allows planar movement of the connectors 16 and guiding pins 18 within the securing mechanism 20. For doing so, the position adjustment mechanism 22 is installed in the slot defined by the affixing members 24a, 24b, 24c, 24d and 24e. The position adjustment mechanism 22 has a perimeter defining a shape similar to but smaller than the perimeter of the affixing member 24c, thus smaller than the largest aperture of the affixing members. Furthermore, to ensure that the position adjustment mechanism 22 remains within the securing mechanism 20, its perimeter is larger than the perimeter of the affixing members 24a and 24e forming an exterior of the securing mechanism 20.

Thus the position adjustment mechanism 22 moves in a plane defined by the affixing members in the aperture of the affixing member 24c, while being retained in the securing mechanism 20 by the other affixing members 24a, 24b, 24d and 24e. The position adjustment mechanism 22 may be a plate, of a similar shape as the perimeter of the largest aperture of the affixing members. However, the position adjustment mechanism 22 could alternatively be of a different shape than the perimeter 26 of the affixing members, while still being adapted to be installed within the securing mechanism, and move in the plane defined therein.

The connectors 16 and guiding pins 18 are fixed to the position adjustment mechanism 22 by any known means of fixing connectors to a surface, such as for example bonding, clipping, welding, mechanical attachment, etc. Alternately, the connectors 16 and guiding pins 18 could be affixed to the position adjustment mechanism 22 in such a manner that the position adjustment mechanism surrounds a section of the connectors. The position adjustment mechanism 22 could have various shapes, and not necessarily be flat. The position adjustment mechanism could be made of metal, plastic, composite material, brass, or any other material capable of withstanding physical constraints applied thereon. Furthermore, the position adjustment mechanism 22 is not limited to receiving the connectors 16 and guiding pins 18 in a linear arrangement as shown, but could alternately receive the connectors 16 and guiding pins 18 in a square arrangement, in a matrix arrangement, in a symmetric or asymmetrical arrangement, etc.

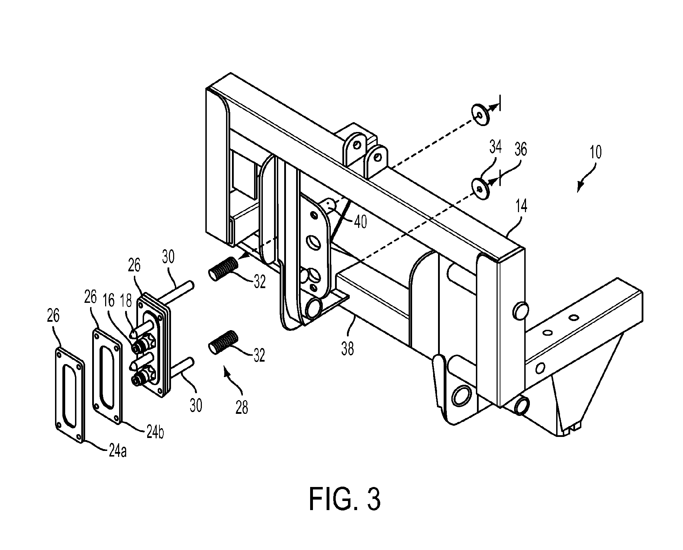

Reference is now made to Figure 3, which is a perspective exploded view of a hitch with the present position adjustable coupler in accordance with another aspect. In this other aspect, the position adjustable coupler is further provided with a compression adjustment mechanism 28 for adjusting pressure received by the connectors 16. More particularly, the compression adjustment mechanism 28 provides a complimentary adjustment for the connectors 16 in a direction perpendicular to the planar movement provided by the position adjustment mechanism 22. The compression adjustment mechanism 28 is hereby realized by a combination of sliding pins 30, springs 32, flat washers 34 and securing pins 36. At least two sliding pin 30 are affixed to the securing mechanism 20. The sliding pins 30 are adapted for being inserted in receiving fixed bushing 40 of a securing plate 38 affixed to the hitch 14. The springs 32 are inserted on the sliding pins 30, which are in turn inserted in the receiving fixed bushing 40 and affixed thereto by the flat washers 34 and securing pins 36. The compression adjustment mechanism 28 thus adjusts the pressure received by the connectors during an impact on the hitch 10, by compressing or decompressing the springs 32, and thus reducing the impact at the connectors level. Additionally, the compression adjustment mechanism 28 assists in connecting the connectors 16 by providing a controlled pressure on the connectors 16. For doing so, the pressure exerted by the compression adjustment mechanism 28 is preferably greater than the pressure required for performing automatic connection of the connectors 16, while being sufficiently low to absorb impacts. Furthermore, the difference between a free length and a block length, also called operating length of the compression adjustment mechanism 28, corresponds to a connection distance to perform the connection of the connectors 16, with an added tolerance if desired. For example, an operating length of 1" has been successfully tested for hydraulic connectors 16 having a connection length of ½ an inch.

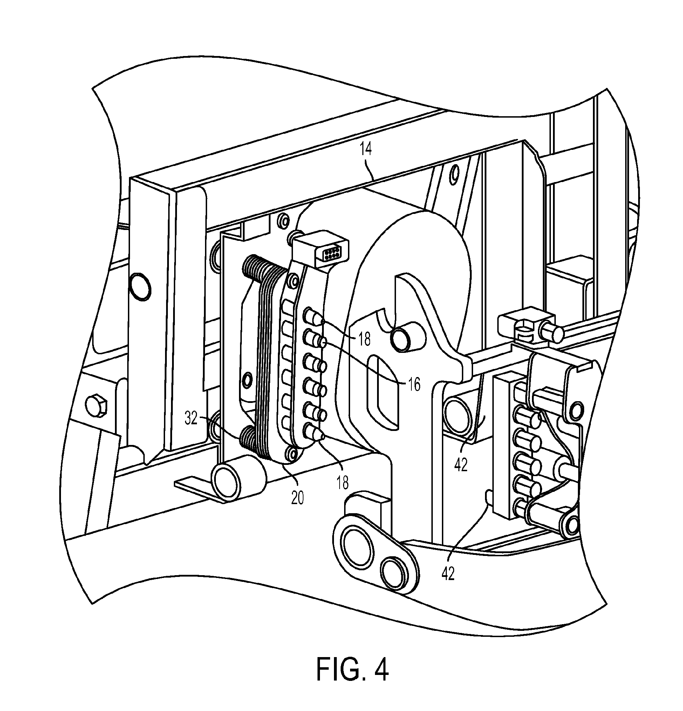

Reference is now made to Figure 4, which is a perspective view of a hitch with the present coupler and a corresponding vehicle hitch. It can be seen from this Figure that the guiding pins 18 performs multiple purposes. First, the guiding pins 18 assist during connection of the connectors 16 to the corresponding alignment tubes 42 of the tractor by guiding the coupler 12. Secondly, the guiding pins 18 prevent the coupler 12 from rotating during the connection of the connectors 16. For doing so, two guiding pins 18 are strategically positioned to counteract the rotation of the connectors 16 by the position adjustment mechanism 22 during connection. Also, to optimize the adjustment of the connectors 16 during the connection process, the guiding pins 18 are provided with tapered tips. To benefit from a maximum adjustment during the connection process, the distance between the tip of each guiding pin 18 and an inner surface of its corresponding alignment tube 42 is set to twice the planar movement of the position adjustment mechanism 22.

Although the present compression adjustment mechanism 28 has been depicted with a pair of sliding pins 30, springs 32, flat washers 34 and securing pins 36, the present coupler is not limited to such an implementation. The present coupler could also use other means of compression adjustment than springs, such as for example resilient materials, shape memory alloys, hydraulic means, pneumatic means, etc.

The guiding pins 18 could alternatively be replaced by a greater number or lesser number of guiding pins. Alternatively, the guiding pins 18 could be replaced by a single guiding pin of a shape preventing rotation of the connectors 16, while assisting in guiding the connection of the coupler 12.

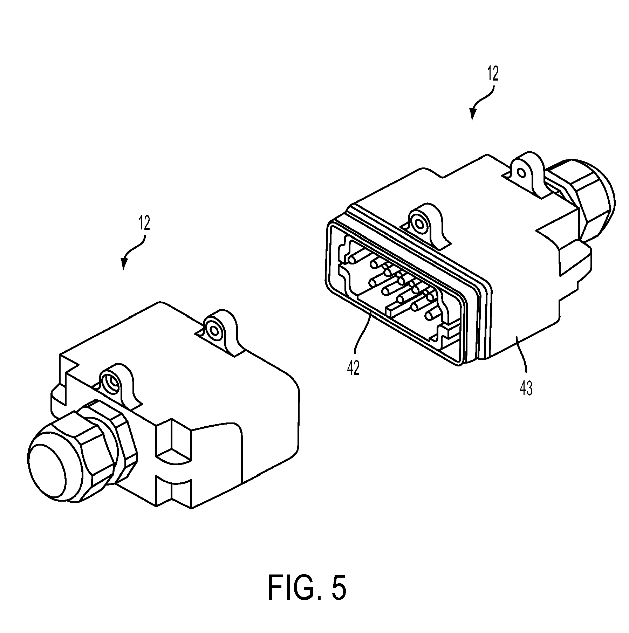

Reference is now made to Figure 5, which depicts another aspect of the present coupler 12, in which the connectors are electric connectors 42, and the securing mechanism is incorporated within a casing 43. The casing 43 must be affixed to the position adjustment mechanism 22.

The present coupler has been described by way of preferred embodiments. It should be clear to those skilled in the art that the described preferred embodiments are for exemplary purposes only, and should not be interpreted to limit the scope of the present coupler. The scope of the present coupler should be defined by reference to the appended claims, which clearly delimit the protection sought.

## Claims

1. A position adjustable coupler comprising:
a connector; and
a securing mechanism for fixedly securing the connector to a frame, the securing mechanism comprising a position adjustment mechanism for allowing planar movement of the connector within the securing mechanism.

2. The position adjustable coupler of claim 1, wherein the securing mechanism comprises a slot defining a perimeter of an aperture in which the position adjustment mechanism moves.

3. The position adjustable coupler of claim 2, wherein the position adjustment mechanism has a perimeter defining a shape similar to the aperture.

4. The position adjustable coupler of claim 3, wherein the position adjustment mechanism is a plate surrounding a section of the connector.

5. The position adjustable coupler of claim 1, wherein the connector is at least one of the following: a hydraulic connector, an electric connector, a pneumatic connector.

6. The position adjustable coupler of claim 1, further comprising a compression adjustment mechanism for adjusting pressure and position perpendicular to the planar movement received by the connector.

7. A hitch comprising:
a frame;
a connector; and
a securing mechanism for fixedly securing the connector to the frame, the securing mechanism comprising a position adjustment mechanism for allowing planar movement of the connector within the securing mechanism.

8. The hitch of claim 7, wherein the securing mechanism comprises a slot defining a perimeter of an aperture in which the position adjustment mechanism moves.

9. The hitch of claim 8, wherein:
the position adjustment mechanism has a perimeter defining a shape similar to the aperture; and
the position adjustment mechanism is a plate surrounding a section of the connector.

10. The hitch of claim 7, wherein the connector is at least one of the following: a hydraulic connector, an electric connector, a pneumatic connector.

11. The hitch of claim 7, further comprising a compression adjustment mechanism for adjusting pressure and position perpendicular to the planar movement received by the connector.

12. A position adjustable coupler comprising:
a connector;
a securing mechanism for fixedly securing the connector to a frame, the securing mechanism comprising a position adjustment mechanism for allowing planar movement of the connector within the securing mechanism; and
a compression adjustment mechanism for adjusting pressure and position perpendicular to the planar movement received by the connector.

13. The position adjustable coupler of claim 12, wherein the securing mechanism comprises a slot defining a perimeter of an aperture in which the position adjustment mechanism moves.

14. The position adjustable coupler of claim 13, wherein:
the position adjustment mechanism has a perimeter defining a shape similar to the aperture; and
the position adjustment mechanism is a plate surrounding a section of the connector.

15. The position adjustable coupler of claim 13, wherein the connector is at least one of the following: a hydraulic connector, an electric connector, a pneumatic connector.
